# EUROPEAN PATENT APPLICATION

(11) **EP 3 282 396 A1**
(43) Date of publication of application: **14.02.2018**
(21) Application number: 16776303.6
(22) Date of filing: 27.01.2016
(51) Int. Cl.: G06K 19/073, B42D 25/22, G06F 21/62, G06K 7/10, G06K 19/07, G06Q 20/34, H04M 1/00

(54) **CARD AND APPLICATION PROGRAM**

(30) Priority: 07.04.2015 JP 2015078773
(71) Applicant: APS S.A., 3895 Foetz (LU)
(72) Inventor: LEE, Kevin, 3895 Foetz (LU)
(74) Representative: Vidon Brevets & Stratégie
(86) International application number: PCT/JP2016/052391
(87) International publication number: WO 2016/163134

(57) **Abstract**

Provided is a card (2) which functions as a credit card or a cash card, the card including: a card management section 34 configured to (i) transmit card information to a smartphone (2), (ii) accept from the smartphone (2) an instruction for activating the card (3), and (iii) activate the card in accordance with the instruction thus accepted; and a battery (37) which is rechargeable and is configured to supply electric power used in the card (3).

## Description

### Technical Field

The present invention relates to (i) a card which functions as a credit card or a cash card and (ii) an application program for execution by a mobile terminal.

### Background Art

In recent times, unauthorized use of cards such as credit cards and cash cards has become problematic. For example, issues of public concern include (1) a third party picking up and using a card that has been lost by its owner and (2) theft of card information by use of skimming, which allows production and use of a duplicate card having identical card information. The latter issue in particular has recently been a widely used method in card crime. A method of bringing an NFC reader in proximity to a card so as to steal information contained in the IC of the card has become an issue of public concern. There have therefore been developments in techniques for solving such problems.

For example, Non-Patent Literature 1 discloses a credit card which is activated by receiving input of a personal identification number. The credit card has on its front side a display and five buttons. Once the owner of the credit card inputs the personal identification number, the display displays the card number and the credit card becomes activated.

### Citation List

### [Non-patent Literature]

[Non-patent Literature 1]
Dynamics Inc., "Security:Hidden", Date of internet search: March 31, 2015, (URL: https:dynamicsinc.com/ Corporate/ Products)

### Summary of Invention

### Technical Problem

Unfortunately, with the above conventional techniques, a large amount of electric power is consumed in order to activate the card, and a large amount of electric power is therefore consumed from a battery integrated in the card.

The present invention was made in view of the above problems. An object of the present invention is to provide techniques which prevent unauthorized use of a credit card, a cash card, or the like while also preventing consumption of electric power from a battery integrated in such a card.

### Solution to Problem

In order to solve the above problems, a card in accordance with an aspect of the present invention is a card which functions as a credit card or a cash card, the card including: a card information transmitting section configured to transmit, to a mobile terminal, card information for distinguishing the card from other cards; an activation instruction accepting section configured to accept, from the mobile terminal, an instruction for activating the card; an activation section configured to activate the card in accordance with the instruction accepted by the activation instruction accepting section; and a battery which is rechargeable and is configured to supply electric power used in the card.

In order to solve the above problems, an application program in accordance with an aspect of the present invention is an application program for execution by a mobile terminal, the application program causing the mobile terminal to function as: a card information receiving section configured to receive, from a target card which is a credit card or a cash card, card information for distinguishing the target card from other cards; a determining section configured to determine whether or not the card information received by the card information receiving section matches predetermined card information; and a card activating section configured to activate the target card in a case where the determining section has determined that the card information matches the predetermined card information.

### Advantageous Effects of Invention

An embodiment of the present invention makes it possible to prevent unauthorized use of a credit card, a cash card, or the like while also preventing consumption of electric power from a battery integrated in such a card.

### Brief Description of Drawings

Fig. 1 is a block diagram schematically illustrating a card activation system in accordance with an embodiment of the present invention.
Fig. 2 is a flowchart illustrating a flow of a process carried out by a smartphone in accordance with an embodiment of the present invention.
Fig. 3 is a flowchart illustrating a flow of a process carried out by a card in accordance with an embodiment of the present invention.
Fig. 4 illustrates an example of an image displayed by a smartphone in accordance with an embodiment of the present invention.
Fig. 5 illustrates an external appearance of a card in accordance with an embodiment of the present invention.

### Description of Embodiments

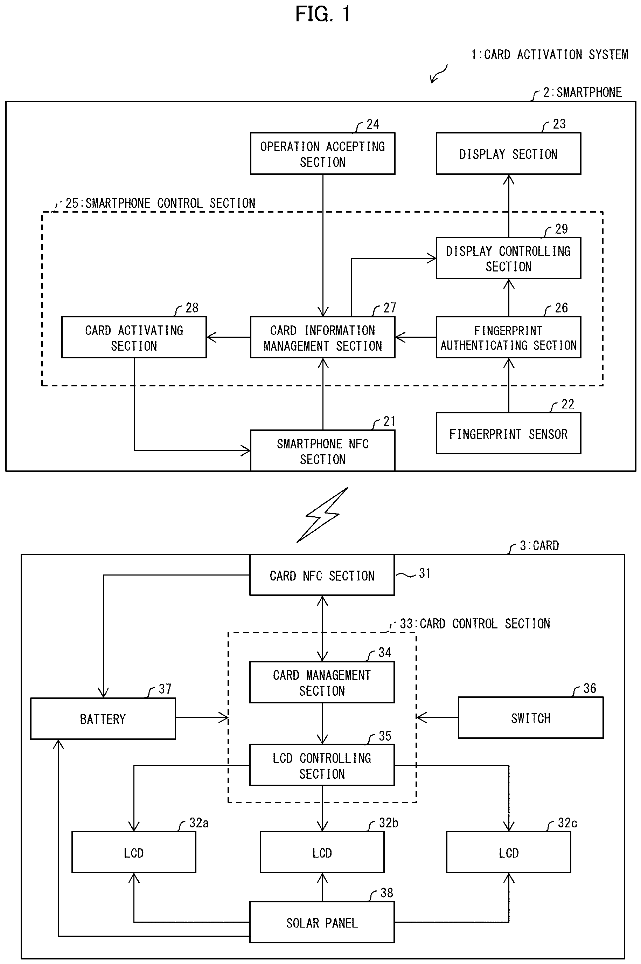

The following description will discuss an Embodiment of the present invention with reference to Figs. 1 to 5.

### (Card activation system 1)

Fig. 1 is a block diagram schematically illustrating a card activation system 1 in accordance with Embodiment 1. As illustrated in Fig. 1, the card activation system 1 includes a smartphone (mobile terminal) 2 and a card (target card) 3. In the card activation system 1, the card 3, which functions as a credit card or a cash card (debit card), is activated by the smartphone 2 via short-range wireless communication. In other words, since the card 3 remains deactivated until activated by the smartphone 2, the user cannot use the card 3 until it is activated.

In Embodiment 1, the card activation system 1 is exemplarily discussed as employing near field communication (NFC) as the short-range wireless communication. Note, however, that the present invention is not limited to employing NFC as the short-range communication.

### (Smartphone 2)

The smartphone 2 activates the card 3 in a case where (i) the smartphone 2 has received, from the card 3, card information for distinguishing the card 3 from other cards and (ii) the card information thus received matches predetermined card information. Examples of the card information encompass, but are not limited to, a card number. Note also that in the present invention, a terminal for activating the card is not limited to being a smartphone. For example, the terminal can be a mobile terminal (such as a tablet PC) which does not function as a telephone. As illustrated in Fig. 1, the smartphone 2 includes a smartphone NFC section 21, a fingerprint sensor 22, a display section 23, an operation accepting section 24, and a smartphone control section 25.

The smartphone NFC section 21 is a device configured to communicate via NFC with the card 3 (more specifically, with a card NFC section 31, described later). The fingerprint sensor 22 is a sensor configured to acquire fingerprint information, which is information about a user's fingerprint. The display section 23 is a device configured to display an image represented by an image signal outputted by the smartphone control section 25. The display section 23 is realized by, for example, a backlit transmissive liquid crystal panel or an organic electroluminescent (EL) display. The operation accepting section 24 is a device configured to accept an operation from the user and output operation information which indicates an accepted operation. The operation accepting section 24 is realized by, for example, a touch sensor provided so as to positionally overlap with the display section 23.

The smartphone control section 25 is configured to comprehensively control each section of the smartphone 2 and is realized by a CPU. As illustrated in Fig. 1, the smartphone control section 25 also functions as a fingerprint authenticating section 26, a card information management section (card information receiving section, determining section) 27, a card activating section 28, and a display controlling section 29.

The fingerprint authenticating section 26 is configured to determine whether or not fingerprint information outputted by the fingerprint sensor 22 matches fingerprint information which has been registered in advance. The fingerprint authenticating section 26 then outputs a result of the determination. For example, with the smartphone 2, registering in advance fingerprint information of a user of the smartphone 2 makes it possible for that user to be the sole user capable of operating the smartphone 2. The card information management section 27 is configured to manage card information, about one or more cards, which has been registered in advance. The process by which the card information management section 27 manages the card information will be discussed later in more detail with reference to a flowchart. The card activating section 28 is configured to activate a card (that is, instructs a card to become activated) via the smartphone NFC section 21. More specifically, the card activating section 28 is configured to transmit a signal indicating that the card is to be activated. The display controlling section 29 is configured to supply, to the display section 23, an image signal representing an image to be displayed by the display section 23.

### (Card 3)

The card 3 transmits card information to the smartphone 2 and becomes activated once it receives from the smartphone 2 an instruction for activating the card 3. As illustrated in Fig. 1, the card 3 includes the card NFC section 31, an LCD 32a, an LCD 32b, an LCD 32c, a card control section 33, a switch 36, a battery 37, and a solar panel (solar cell) 38.

The card NFC section 31 is a device configured to communicate via NFC with the smartphone 2 (more specifically, with the smartphone NFC section 21). The card NFC section 31 is capable of supplying, to the battery 37, electric power supplied by a device with which the card 3 communicates via NFC. In a case where the card 3 includes a contact-type communication section (not shown) instead of or in addition to the card NFC section 31, the contact-type communication section is capable of supplying, to the battery 37, electric power which is supplied by a terminal (for example, a payment terminal or an automated teller machine (ATM)) which communicates with the card 3 while in contact with the contact-type communication section. The card 3 therefore makes it possible to suitably prevent the battery 37 from becoming completely discharged.

The LCD 32a, LCD32b, and LCD 32c (hereinafter also collectively referred to as LCDs (display section) 32) are each a device configured to display an image represented by an image signal outputted by the card control section 33. The LCDs 32 are each a liquid crystal panel which can be integrated into the card 3. Note, however, that the LCDs 32 are not limited to a liquid crystal panel and may be any display device which can be integrated into the card 3. The card control section 33 is configured to comprehensively control each section of the card 3 and is realized by a CPU. A detailed description of the card control section 33 will be provided later.

The switch 36 is a device configured to accept an operation from the user to turn on the card 3. The battery 37 is an integrated battery which is configured to supply electric power to the card control section 33. The solar panel 38 is a solar cell which is configured to convert light into electric energy. While the card 3 is turned on, the solar panel 38 supplies to the LCDs 32 the electric energy thus converted. By including the solar panel 38, the card 3 is capable of preventing the battery 37 from running down. While the card 3 is not turned on, the solar panel 38 supplies electric power it has generated to the battery 37. The card 3 therefore makes it possible to suitably prevent the battery 37 from becoming completely discharged.

As illustrated in Fig. 1, the card control section 33 also functions as a card management section (card information transmitting section, activation instruction accepting section, activation section) 34 and an LCD controlling section 35. The card management section 34 is configured to manage card information about the card 3. The process by which the card management section 34 manages the card information will be discussed later in more detail with reference to a flowchart. The LCD controlling section 35 is configured to supply, to the LCDs 32, image signals representing images to be displayed by the LCDs 32.

### (Process carried out by smartphone 2)

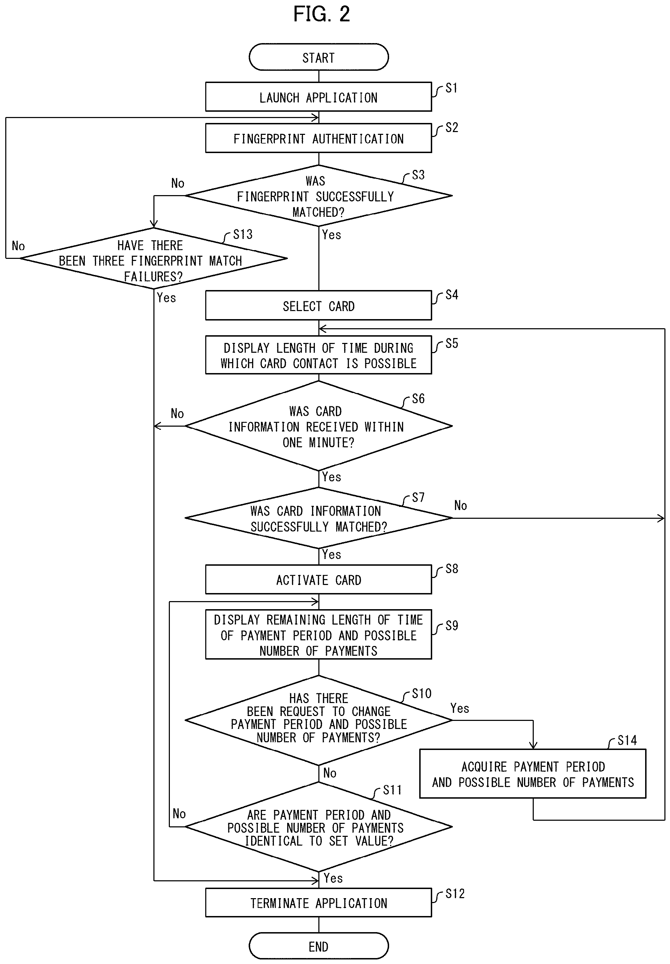

Fig. 2 is a flowchart illustrating a flow of a process carried out by the smartphone 2 in accordance with Embodiment 1. The following description will discuss, with reference to Fig. 2, the process carried out by the smartphone 2.

First, in a case where the smartphone control section 25 accepts, from the user and via the operation accepting section 24, an instruction to launch an application for card activation, the smartphone control section 25 launches the application (step S1; hereinafter, the word "step" will be omitted). Thereafter, in a case where the fingerprint authenticating section 26 acquires fingerprint information via the fingerprint sensor 22, the fingerprint authenticating section 26 (i) determines whether or not the fingerprint information matches predetermined fingerprint information and (ii) supplies a result of the determination to the card information management section 27 (S2). The card information management section 27 determines whether or not the result of the determination indicates that the fingerprint was successfully matched (S3).

In a case where the card information management section 27 determines in S3 that the fingerprint was successfully matched (S3: "Yes"), the card information management section 27 selects a card to be activated, in accordance with operation information acquired from the user via the operation accepting section 24 (S4). Discussed in Embodiment 1 is a case in which the card information management section 27 acquires operation information indicating an operation to select the card 3. The card information management section 27 then instructs the display controlling section 29 to display a length of time during which card contact is possible (in Embodiment 1, one minute). Upon receiving the instruction, the display controlling section 29 causes the display section 23 to display the length of time during which card contact is possible (S5). The card information management section 27 then determines whether or not card information was received within the length of time during which card contact was made possible, i.e., within one minute (S6).

In a case where the card information management section 27 determines in S6 that the card information was received within one minute (S6: "Yes"), the card information management section 27 determines whether or not the card information thus received matches, out of card information managed by the card information management section 27, card information for the card selected in S4 (S7). In a case where the card information management section 27 determines in S7 that the card information was successfully matched (S7: "Yes"), the card activating section 28 activates the card 3 in a manner so as to specify (i) a period during which the card is to be activated (a payment period) and (ii) a number of times the card can be used (a possible number of payments) (S8). The payment period and the possible number of payments specified by the card activating section 28 can be set in advance by the user or can be a predetermined payment period and a predetermined possible number of payments.

Next, the card information management section 27 instructs the display controlling section 29 to display a remaining length of time of the payment period and a possible number of payments. Upon receiving the instruction, the display controlling section 29 causes the display section 23 to display the remaining length of time of the payment period and the possible number of payments (S9). Note that, hereinafter, "the payment period and the possible number of payments" can alternatively be "at least one of the payment period and the possible number of payments." The card information management section 27 then determines whether or not it has received operation information indicating an operation to change the payment period and the possible number of payments (S10).

In a case where the card information management section 27 determines in S10 that there has not been a request to change the payment period and the possible number of payments (S10: "No"), the card information management section 27 determines whether or not the payment period and the possible number of payments are identical to respective set values (S11). In a case where the card information management section 27 determines in S11 that the payment period and the possible number of payments are identical to the respective set values (S11: "Yes"), the card information management section 27 terminates the application for card activation (S12).

In a case where the card information management section 27 determines in S3 that the fingerprint was not successfully matched (S3: "No"), the card information management section 27 then determines whether or not a predetermined number of match failures (in Embodiment 1, three) has been reached (S13). In a case where the card information management section 27 determines in S13 that the number of match failures is not three (S13: "No"), the process returns to S2, and the card information management section 27 once again carries out fingerprint authentication. In a case where the card information management section 27 determines in S13 that the number of match failures is three (S13: "Yes"), or in a case where the card information management section 27 determines in S6 that the card information was not received within one minute (S6: "No"), the process proceeds to S12, and the card information management section 27 terminates the application.

In a case where the card information management section 27 determines in S10 that there was a request to change the payment period and the possible number of payments (S10: "Yes"), the card information management section 27 acquires a payment period and a possible number of payments as set by user input (S14), and the process returns to S5. The process also returns to S5 also in a case where the card information management section 27 determines in S7 that the card information was not successfully matched (S7: "No").

In a case where the card information management section 27 determines in S1 that the payment period and the possible number of payments are not identical to the respective set values (S11: "No"), the process returns to step S9.

In this way, the smartphone 2 of Embodiment 1 receives card information from the card 3 and determines whether or not the card information matches predetermined card information. In a case where the smartphone 2 determines that the card information thus received matches the predetermined card information, the smartphone 2 activates the card 3. As such, the smartphone 2 obviates the need for the card 3 to carry out a process for determining whether or not the card 3 should be activated. The smartphone 2 therefore makes it possible to prevent consumption of electric power from the battery 37 of the card 3. Furthermore, since the smartphone 2 activates the card 3, even if the owner of the card 3 loses the card 3, it is possible to prevent a third party from making unauthorized use of the card 3.

The smartphone 2 activates the card 3 in a manner so as to specify at least one of (i) a period during which the card 3 is to be activated and (ii) a number of times the card 3 can be used. Since the smartphone 2 allows a user to operate the smartphone 2 so as to change at least one of the period during which the card 3 is to be activated and the number of times the card 3 can be used, the smartphone 2 makes it possible to improve convenience for the user.

### (Process carried out by card 3)

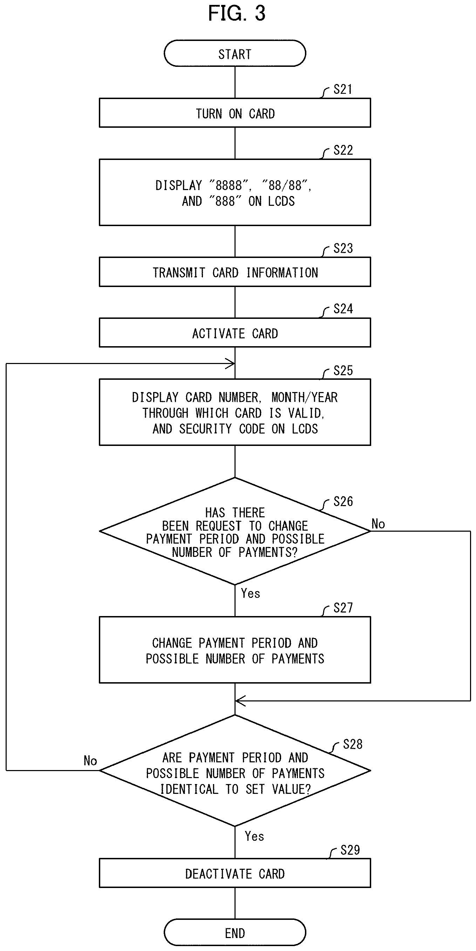

Fig. 3 is a flowchart illustrating a flow of a process carried out by the card 3 in accordance with Embodiment 1. The following description will discuss, with reference to Fig. 3, the process carried out by the card 3.

In a case where the card control section 33 acquires, via the switch 36, operation information indicating an operation to turn on the card 3, the card control section 33 turns on the card 3 by use of electric power supplied by the battery 37 (S21). The LCD controlling section 35 then causes the LCDs 32 to display an image (in Embodiment 1, the number "8") indicating that the card 3 has been turned on (S22). Next, the card management section 34 transmits, to the smartphone 2 and via the card NFC section 31, card information about the card 3 (S23).

Thereafter, in a case where the card management section 34 receives, from the smartphone 2, an instruction to activate the card 3, the card management section 34 activates the card 3 (S24). More specifically, in a case where the card management section 34 receives a signal indicating that the card is to be activated, the card management section 34 activates the card 3. Once the card 3 has been activated, the LCD controlling section 35 causes the LCDs 32 to display respective images (in Embodiment 1, the LCD 32a displays the card number, the LCD 32b displays a month/year through which the card 3 is valid, and the LCD 32c displays a security code; S25). Next, the card management section 34 determines whether or not there was a request, on the smartphone 2, to change the payment period or the possible number of payments (S26). In other words, the card management section 34 determines whether or not the smartphone 2 has once again activated the card 3 in a manner so as to specify a payment period and a possible number of payments.

In a case where the card management section 34 determines in S26 that there was a request to change the payment period and the possible number of payments (S26: "Yes"), the card management section 34 changes the payment period and the possible number of payments (S27). Thereafter, the card management section 34 determines whether or not the payment period and the possible number of payments are identical to respective set values (S28). The process proceeds to S28 also in a case where the card management section 34 determines in S26 that there has not been a request to change the payment period and the possible number of payments (S26: "No").

In a case where the card management section 34 determines in S28 that the payment period and the possible number of payments are identical to the respective set values (S28: "Yes"), the card management section 34 deactivates the card 3. In a case where the card management section 34 determines in S28 that the payment period and the possible number of payments are not identical to the respective set values (S28: "No"), the process returns to step S25.

In this way, the card 3 of Embodiment 1 transmits the card information to the smartphone 2 and thereafter, in a case where the card 3 accepts an instruction for activation from the smartphone 2, the card 3 becomes activated. As such, the card 3 does not need to carry out a process for determining whether or not the card 3 should be activated. The card 3 therefore makes it possible to prevent consumption of electric power from the battery 37. Furthermore, since the card 3 accepts an instruction to become activated from the smartphone 2, even if the owner of the card 3 loses the card 3, it is possible to prevent a third party from making unauthorized use of the card 3. The card 3 is in a deactivated state except when being used by its owner. The card 3 therefore makes it possible to prevent the card information from being stolen by use of skimming.

### (Example of image displayed by smartphone 2)

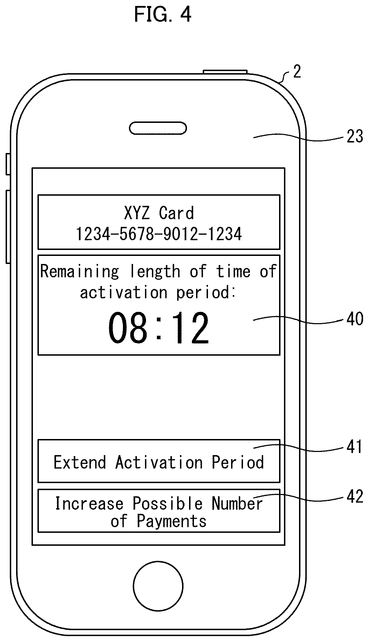

Fig. 4 illustrates an example of an image displayed by the smartphone 2 in accordance with Embodiment 1. As illustrated in Fig. 4, once the smartphone 2 has activated a card, the smartphone 2 displays, on the display section 23, an image which includes an image 40 indicating a remaining length of time of the payment period. The smartphone 2 may also be configured to display an image which includes, in addition to the image 40, an image indicating the possible number of payments. By displaying at least one of the payment period and the possible number of payments in this way, the smartphone 2 makes it possible to inform the user of a period during which the card will be activated and a number of times the card can be used.

Furthermore, as illustrated in Fig. 4, the smartphone 2 can display an image which includes (i) a button 41 for accepting a change to the payment period and (ii) a button 42 for accepting a change to the possible number of payments. This configuration makes it possible to inform the user that the user may change the period during which the card will be activated and the number of times the card can be used.

### (External appearance of card 3)

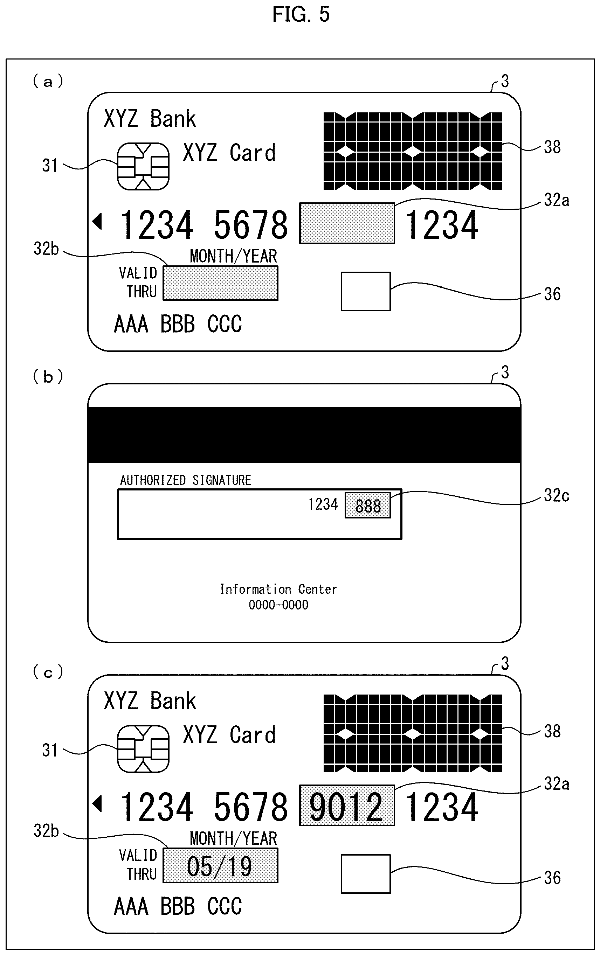

Fig. 5 illustrates an external appearance of the card 3 in accordance with Embodiment 1. Hereinafter, a side of the card 3 which side includes the signature of the owner will be referred to as a rear side, and a side facing a direction opposite the direction which the rear side faces will be referred to as a front side. (a) of Fig. 5 illustrates an example of how the front side appears while the card 3 is deactivated. (b) of Fig. 5 illustrates an example of how the rear side appears while the card 3 is activated. (c) of Fig. 5 illustrates an example of how the front side appears while the card 3 is activated.

As illustrated in (a) of Fig. 5, the LCD 32a is positioned so as to obscure a portion of the card number appearing on the front side of the card 3. As such, while the LCD 32a is not displaying an image (that is, while the card 3 is in a deactivated state), only a portion of the card number of the card 3 will be shown to the user. This makes it possible to prevent a third party from making unauthorized use of the card 3. Furthermore, as illustrated in (a) and (b) of Fig. 5, the card 3 also includes the LCD 32b for displaying the month/year through which the card 3 is valid and the LCD 32c for displaying the security code. Though not illustrated in (a) of Fig. 5, the LCD 32c does not display an image while the card 3 is in a deactivated state, similarly to the LCD 32a and the LCD 32b.

In a case where the user pushes the switch 36 while the card 3 is in a deactivated state and then brings the card NFC section 31 of the card 3 into proximity to the smartphone NFC section 21 of the smartphone 2, the card 3 transmits the card information to the smartphone 2. Thereafter, once the card 3 has been activated, the LCD 32c displays the security code, as illustrated in (b) of Fig. 5. Furthermore, the LCD 32a displays the card number, and the LCD 32b displays the month/year through which the card 3 is valid, as illustrated in (c) of Fig. 5.

### [Software implementation example]

Control blocks of each of the smartphone 2 and the card 3 (in particular, the smartphone control section 25 of the smartphone 2) can be realized by a logic circuit (hardware) provided in an integrated circuit (IC chip) or the like or can be alternatively realized by software (an application program) as executed by a central processing unit (CPU).

In the latter case, the smartphone 2 and the card 3 each include a CPU that executes instructions of a program that is software realizing the foregoing functions; a read only memory (ROM) or a storage device (each referred to as "storage medium") in which the program and various kinds of data are stored so as to be readable by a computer (or a CPU); and a random access memory (RAM) in which the program is loaded. An object of the present invention can be achieved by a computer (or a CPU) reading and executing the program stored in the storage medium. Examples of the storage medium encompass "a non-transitory tangible medium" such as a tape, a disk, a card, a semiconductor memory, and a programmable logic circuit. The program can be supplied to the computer via any transmission medium (such as a communication network or a broadcast wave) which allows the program to be transmitted. Note that the present invention can also be achieved in the form of a computer data signal in which the program is embodied via electronic transmission and which is embedded in a carrier wave.

The present invention is not limited to the above-described embodiment, but can be altered by a skilled person in the art within the scope of the claims. The present invention also encompasses, in its technical scope, any embodiment derived by combining technical means disclosed in the embodiment.

### [Additional Remarks]

In order to solve the above problems, an application program in accordance with an aspect of the present invention is an application program for execution by a mobile terminal, the application program causing the mobile terminal to function as: a card information receiving section configured to receive, from a target card which is a credit card or a cash card, card information for distinguishing the target card from other cards; a determining section configured to determine whether or not the card information received by the card information receiving section matches predetermined card information; and a card activating section configured to activate the target card in a case where the determining section has determined that the card information matches the predetermined card information.

With the above configuration, the application program causes the mobile terminal to function in a manner so as to (i) receive card information from a target card and then (ii) activate the target card in a case where the mobile terminal determines that the card information thus received matches predetermined card information. As such, the application program obviates the need for the target card to carry out a process for determining whether or not the target card should be activated. The application program therefore makes it possible to prevent consumption of electric power from a battery integrated in the target card. Since the application program makes it possible to for the mobile terminal to activate the target card, even if the owner of the target card loses the target card, it is possible to prevent a third party from making unauthorized use of the target card. Furthermore, since the card is in a deactivated state except when being used by its owner, it is possible to prevent the card information from being stolen by use of skimming.

The application program in accordance with an aspect of the present invention can be arranged such that the card activating section is configured to activate the target card in a manner so as to specify at least one of (i) a period during which the target card is to be activated and (ii) a number of times the target card can be used.

With the above configuration, the application program makes it possible to improve convenience for the user.

A card in accordance with an aspect of the present invention is a card which functions as a credit card or a cash card, the card including: a card information transmitting section configured to transmit, to a mobile terminal, card information for distinguishing the card from other cards; an activation instruction accepting section configured to accept, from the mobile terminal, an instruction for activating the card; an activation section configured to activate the card in accordance with the instruction accepted by the activation instruction accepting section.

With the above configuration, the card becomes activated in a case where the card transmits the card information to the mobile terminal and then accepts, from the mobile terminal, an instruction for activating the card. As such, the card itself does not need to determine whether or not it should be activated. The card therefore makes it possible to prevent consumption of electric power from a battery integrated in the card. Furthermore, since the card accepts an instruction to become activated from the mobile terminal, even if the owner of the card loses the card, it is possible to prevent a third party from making unauthorized use of the card.

A card in accordance with an aspect of the present invention may be arranged so as to include: a display section configured to display at least a portion of the card information; and a solar cell configured to supply electric power to the display section.

With the above configuration, the solar cell included in the card supplies electric power to the display section, which displays the card information. The card therefore makes it possible to suitably prevent consumption of electric power from a battery integrated in the card. Furthermore, while the display section is not consuming electric power, electric power generated by the solar cell can be stored in the battery integrated in the card. The card therefore makes it possible to suitably prevent the battery integrated in the card from becoming completely discharged.

A card in accordance with an aspect of the present invention is a card which functions as a credit card or a cash card, the card including: a card information transmitting section configured to transmit, to a mobile terminal, card information for distinguishing the card from other cards; an activation instruction accepting section configured to accept, from the mobile terminal, an instruction for activating the card; an activation section configured to activate the card in accordance with the instruction accepted by the activation instruction accepting section; and a battery which is rechargeable and is configured to supply electric power used in the card.

With the above configuration, the card becomes activated in a case where the card transmits the card information to the mobile terminal and then accepts, from the mobile terminal, an instruction for activating the card. As such, the card itself does not need to determine whether or not it should be activated. The card therefore makes it possible to prevent consumption of electric power from the battery. Furthermore, since the card accepts an instruction to become activated from the mobile terminal, even if the owner of the card loses the card, it is possible to prevent a third party from making unauthorized use of the card.

The card in accordance with an aspect of the present invention may be arranged such that the battery is charged by electric power supplied by a device with which the card communicates via short-range wireless communication.

With the above configuration, the battery of the card can be charged by electric power supplied by a device with which the card communicates via short-range wireless communication.

The card in accordance with an aspect of the present invention may be arranged such that the battery is charged by electric power supplied by a device with which the card communicates via contact-type communication.

With the above configuration, the battery of the card can be charged by electric power supplied by a device with which the card communicates via contact-type communication.

### Industrial Applicability

An embodiment of the present invention can be applied to a system for activating a card.

### Reference Signs List

1 Card activation system
2 Smartphone (mobile terminal)
3 Card (target card)
27 Card information management section (card information receiving section, determining section)
28 Card activating section
32a-32c LCD (display section)
34 Card management section (card information transmitting section, activation instruction accepting section, activation section)
38 Solar panel (solar cell)

## Claims

1. A card which functions as a credit card or a cash card, the card comprising:
a card information transmitting section configured to transmit, to a mobile terminal, card information for distinguishing the card from other cards;
an activation instruction accepting section configured to accept, from the mobile terminal, an instruction for activating the card;
an activation section configured to activate the card in accordance with the instruction accepted by the activation instruction accepting section; and
a battery which is rechargeable and is configured to supply electric power used in the card.

2. The card according to claim 1, wherein the battery is charged by electric power supplied by a device with which the card communicates via short-range wireless communication.

3. The card according to claim 1, wherein the battery is charged by electric power supplied by a device with which the card communicates via contact-type communication.

4. An application program for execution by a mobile terminal, the application program causing the mobile terminal to function as:
a card information receiving section configured to receive, from a target card which is a credit card or a cash card, card information for distinguishing the target card from other cards;
a determining section configured to determine whether or not the card information received by the card information receiving section matches predetermined card information; and
a card activating section configured to activate the target card in a case where the determining section has determined that the card information matches the predetermined card information.

5. The application program according to claim 4, wherein the card activating section is configured to activate the target card in a manner so as to specify at least one of (i) a period during which the target card is to be activated and (ii) a number of times the target card can be used.
